# EUROPEAN PATENT APPLICATION

(11) **EP 3 754 251 A1**
(43) Date of publication of application: **23.12.2020**
(21) Application number: 19181092.8
(22) Date of filing: 19.06.2019
(51) Int. Cl.: F21S 8/04, F21V 23/04, G01S 13/08, H05B 37/02, F21V 23/00

(54) **METHOD AND ARRANGEMENT FOR SETTING THE LIGHT LEVEL OF A LUMINAIRE**

(71) Applicant: Helvar Oy Ab, 02150 Espoo (FI)
(72) Inventor: Juslén, Henri, 02150 Espoo (FI)
(74) Representative: Papula Oy

(57) **Abstract**

Lighting apparatus, comprising a controllable power converter (104) for providing operating power to one or more light sources (105), said controllable power converter (104) having a control input (201), and a radar (107) coupled to said control input (201) for providing control signals to the controllable power converter (104). Said radar (107) is configured to generate said control signals on the basis of a distance measurement made by said radar (107). Said controllable power converter (104) is configured to set a power level of said operating power in dependence with said control signals, so that said power level is lower in response to said control signals being indicative of a shorter distance and higher in response to said control signals being indicative of a longer distance measured by said radar (107) .

## Description

### FIELD OF THE INVENTION

The invention relates to the technical field of automatically controlling the amount of artificial light produced with one or more luminaires. In particular the invention relates to the task of ensuring a predefined amount of light on the surface of a structural element in the illuminated environment.

### BACKGROUND OF THE INVENTION

Lighting systems of public buildings, such as office buildings for example, are designed to meet lighting norms that define various aspects of how the lighting should be. One such norm defines horizontal illuminance, which is the total luminous flux incident on a horizontal working surface, such as a table.

A lighting designer uses data from the luminaire manufacturers to select the luminaires and their intended locations in the space to be illuminated. Simulation software tools are available in which the three-dimensional model of the space is augmented with digital representations of the selected luminaires, placed at probationary locations. The simulation software then calculates the illuminance on any given surface. The type, number, and location of luminaires can be changed until the simulation results are satisfactory.

In some cases, however, the actually achieved illuminance on some surfaces is not what was expected. For example there may have occurred some change of plans, so that regular sitting-height working tables were replaced with standing-height ones or vice versa, without making corresponding changes to the lighting plan. In such cases it would be advantageous to have some kind of mechanism for automatically adapting the operation of the lighting system so that the desired illuminance could be maintained despite the changes that affect the surfaces on which the illuminance is observed.

### SUMMARY

It is an objective of the invention to provide a method and an arrangement for controlling lighting in an environment so that the users of that environment would experience the lighting levels as convenient, irrespective of dimensional changes in the environment. Another objective of the invention is to enable controlling the lighting of an environment in a flexible and adaptive manner when changes are made that affect the furniture in that environment. A further objective of the invention is to provide a method and an arrangement of the described kind that could additionally take the presence or absence of users into account.

These and further advantageous objectives of the invention are achieved by using a radar to control the amount of light that is emitted into a direction in which the radar gives indications of distances.

According to a first aspect there is provided a lighting apparatus that comprises a controllable power converter for providing operating power to one or more light sources, said controllable power converter having a control input, and a radar coupled to said control input for providing control signals to the controllable power converter. Said radar is configured to generate said control signals on the basis of a distance measurement made by said radar, and said controllable power converter is configured to set a power level of said operating power in dependence with said control signals, so that said power level is lower in response to said control signals being indicative of a shorter distance and higher in response to said control signals being indicative of a longer distance measured by said radar.

According to an embodiment said radar comprises a directional antenna for making said distance measurements in a predefined direction. This involves the advantage that the distance-dependent selection of the amount of emitted light can be focused on the distance in a particular direction.

According to an embodiment said predefined direction is a vertical direction downwards from said lighting apparatus in an intended operating orientation of the lighting apparatus. This involves the advantage that the radar-based selection of operating power - and consequently the produced illuminance - is readily applicable in luminaires that are installed in or suspended from a ceiling and that are meant to produce some predefined illuminance on horizontal surfaces below them.

According to an embodiment the lighting apparatus comprises one or more light sources coupled to receive said operating power from said controllable power converter, and at least a part of said light sources are configured to direct a majority of their emitted light into said vertical direction downwards from the lighting apparatus. This involves the advantage that the radar-based selection of operating power - and consequently the produced illuminance - is readily applicable in luminaires that are installed in or suspended from a ceiling and that are meant to produce some predefined illuminance on horizontal surfaces below them.

According to an embodiment said radar is configured to perform said distance measurements in at least two different directions. This involves the advantage that more versatile radar-based selection of lighting levels can be performed, for example so that more light is produced when a user is present and/or so that sufficient vertical illuminance is produced on nearby walls.

According to an embodiment said controllable power converter is configured to set said power level of said operating power to a level calculated to, taken known light output characteristics of the lighting apparatus, produce a predefined illuminance value on a transversal surface located at a distance indicated by said distance measurement. This involves the advantage that the process of using radar to control lighting can be flexibly adapted to various actual use cases.

According to an embodiment said lighting apparatus is configured to automatically download information indicative of said light output characteristics of the lighting apparatus from a distant information storage. This involves the advantage that updated information in such a distant information storage can be taken into use in performing the radar-based selection of lighting levels in an up-to-date manner.

According to a second aspect there is provided a method for controlling illuminance at a distance from one or more light source. The method comprises using a radar to measure said distance, and controlling a power level of an operating power provided to said one or more light sources in dependence with the measured distance, so that said power level is lower in response to a shorter measured distance and higher in response to a longer measured distance.

According to an embodiment the method comprises obtaining information indicative of light output characteristics of said one or more light sources, said information enabling calculating illuminance as a function of power level to and distance from said one or more light sources, and selecting said power level on the basis of said information in order to produce a predefined illuminance value on a transversal surface located at the distance measured by said radar. This involves the advantage that the process of using radar to control lighting can be flexibly adapted to various actual use cases.

A method according to claim 9, comprising downloading information indicative of said light output characteristics of the one or more light sources from a distant information storage. This involves the advantage that updated information in such a distant information storage can be taken into use in performing the radar-based selection of lighting levels in an up-to-date manner.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a lighting apparatus in an environment,
**Figure 2** illustrates the coupling of a radar to a control input of a controllable power converter,
**Figure 3** illustrates one possibility of placing the controlling intelligence in a lighting apparatus,
**Figure 4** illustrates another possibility of placing the controlling intelligence in a lighting apparatus,
**Figure 5** illustrates another possibility of placing the controlling intelligence in a lighting apparatus,
**Figure 6** illustrates another possibility of placing the controlling intelligence in a lighting apparatus,
**Figure 7** illustrates producing a desired illuminance value on a tabletop located at a first, longer distance,
**Figure 8** illustrates producing a desired illuminance value on a tabletop located at a second, shorter distance, and
**Figure 9** illustrates a lighting apparatus in which the radar can measure distances in two or more directions.

### DETAILED DESCRIPTION

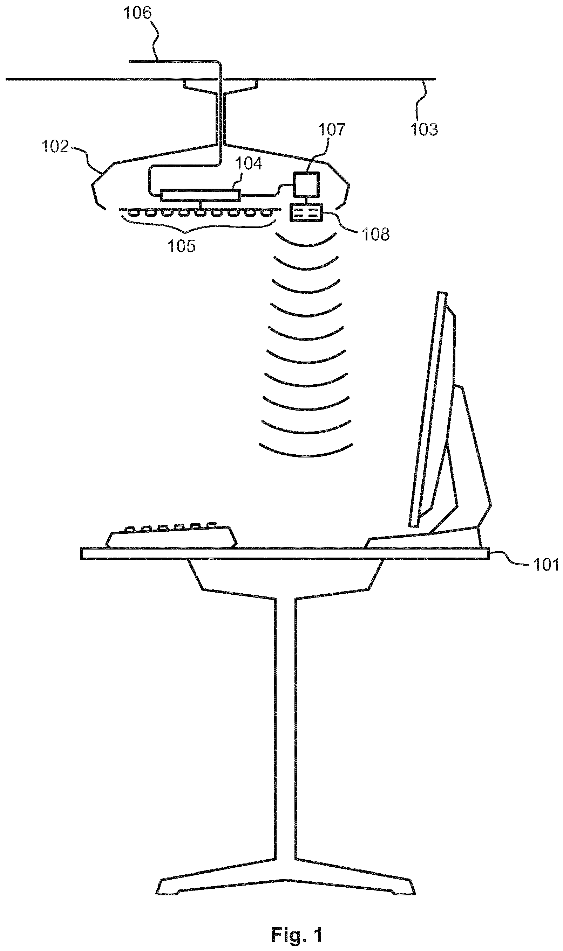

Fig. 1 illustrates the use of a lighting apparatus in an environment. In this case the environment is a room or other indoor environment in which at least one user is expected to work next to a table 101. A lighting apparatus 102, here in the form of a hanging luminaire, is suspended from a ceiling 103 of the room. The lighting apparatus 102 comprises a controllable power converter 104 for providing operating power to one or more light sources 105, which may be for example light-emitting diode chips attached to a circuit board to constitute a so-called LED module. In this example the controllable power converter 104 and the light sources 105 are integral parts of the luminaire, but also other possibilities exist. For example, light sources could be built into one or more surfaces or other structures of the environment, and the controllable power converter could be located at some distance from the light sources inside a false ceiling, in a control cabinet, or the like. Light sources are thus not necessarily a part of the same lighting apparatus to which the controllable power converter 104 belongs.

The controllable power converter 104 receives its operating power from an electric grid (not shown) through a power cable 106. Being controllable means that the amount of output power that the power converter produces, and consequently the amount of light emitted by the light sources 105, can be changed by applying control signals of at least one kind to at least one control input of the controllable power converter 105. Control signals used to control power converters may take a variety of forms, including but not being limited to analog control voltages (typically 0-10V DC), digital control bus signals (such as DALI), phase-cut AC voltages on the input power cable 106, infrared control signals, and wireless control signals such as Bluetooth, ZigBee, WiFi, or other.

The desired amount of light that the lighting apparatus should produce is often expressed as illuminance that is measured on some particular surface. Illuminance is defined as a total luminous flux per unit area and measured in lux, which in turn is defined as lumens per square metre. Norms and standards exist for the illuminance that should be achieved and maintained on various kinds of surfaces in environments like that of fig. 1. As an example, the desired illuminance on the top surface of the table 101 may be 500 lux. Luminaire manufacturers may announce the amount of light emitted by their luminaires for example as luminous flux in lumens, measured in a nominal output direction (here: downwards) of the luminaire. Knowing the distance between the luminaire and the surface on which the desired illuminance is to be achieved it is relatively easy to calculate, what amount of light the luminaire should emit.

As explained before, preliminary calculations made by a lighting designer about the illuminance that is to be achieved may go wrong if the distance between the luminaire and the surface to be illuminated is not what it was expected to be. As a measure to counteract such an error source the lighting apparatus of fig. 1 comprises a radar 107 coupled to a control input of the controllable power source 104. The radar 107 is used to provide control signals to the controllable power converter 104. A radar is basically an apparatus for remotely sensing a distance to a surface that reflects radio signals, so the radar 107 is configured to generate said control signals on the basis of a distance measurement made by it.

The purpose of making the radar 107 provide control signals to the controllable power converter 104 is to set the level of operating power that the last-mentioned provides to the light sources 105 so that as a consequence the amount of light emitted by the light sources 105 produces the desired illuminance on the top surface of the table 101. As a general characterization, the controllable power converter 104 is configured to set a power level of said operating power in dependence with said control signals, so that said power level is lower in response to said control signals being indicative of a shorter distance and higher in response to said control signals being indicative of a longer distance measured by the radar 107.

As the illuminated area is essentialy proportional to the square of the distance, it is advantageous to scale the operating power in proportion to a square of the distance measured by the radar 107. Here it is assumed that the conversion efficiency of the light sources 105 from watts of electric operating power into lumens of emitted light is essentially constant. Any known deviations from such a linear relationship between electric operating power and lumens of emitted light should be taken into account in defining the relationship between the distance measured by the radar 107 and the way in which the operating power produced by the controllable power source 104 is consequently scaled.

As the top surface of the table 101 is in a particular direction from the luminaire (and thus also from the radar 107), and any radar signal reflections from other surfaces are basically just unwanted noise, it may be advantageous to make the radar 107 comprise a directional antenna 108. The purpose of equipping the radar with a directional antenna is to ensure that the distance measurements are made in a predefined direction, which in the example of fig. 1 is a vertical direction downwards from the lighting apparatus in an intended operating orientation of the lighting apparatus. The use of a directional antenna ensures that the measured radar reflections will be largely dominated by reflections from just that surface the distance to which is to be measured.

To what extent any radar antenna is directional is somewhat a matter of definition. The spatial efficiency of the antenna can typically be expressed as an antenna beam pattern that can be characterized by e.g. its full width at half maximum (FWHM). For the purposes of this description an antenna can be considered directional if at the typical distances that will be encountered in illuminated indoor environments a typical surface to which a distance is to be measured will completely cover the FWHM cross-section of the antenna beam pattern. In fig. 1 this means that the antenna 108 is considered directional if, at typical heights to which the table 101 can be set, the top surface of the table 101 is larger in all transversal directions than the FWHM cross-section of the antenna beam pattern. In a simple numerical example where the measured distance is about 2 metres and the table is about 60 cm wide this means that antennas the FWHM of which is less than about 16 degrees would be considered directional.

In addition to the directionality of the radar antenna, also the directionality of the light sources has significance. Above it was pointed out that the light sources are not necessarily part of the same lighting apparatus as the controllable power source and the radar, as long as they are coupled to receive the operating power from the controllable power source. Assuming that the lighting apparatus comprises also the light sources, in order to have a well-defined relationship between the operating power provided by the controllable power source 104 and the obtained illuminance on the monitored surface it is advantageous to make at least a part of the light sources such that they are configured to direct a majority of their emitted light towards the surface to be illuminated. In typical cases like that in fig. 1, with the intended operating orientation of a luminaire suspended from the ceiling, this direction is the vertical direction downwards from the lighting apparatus.

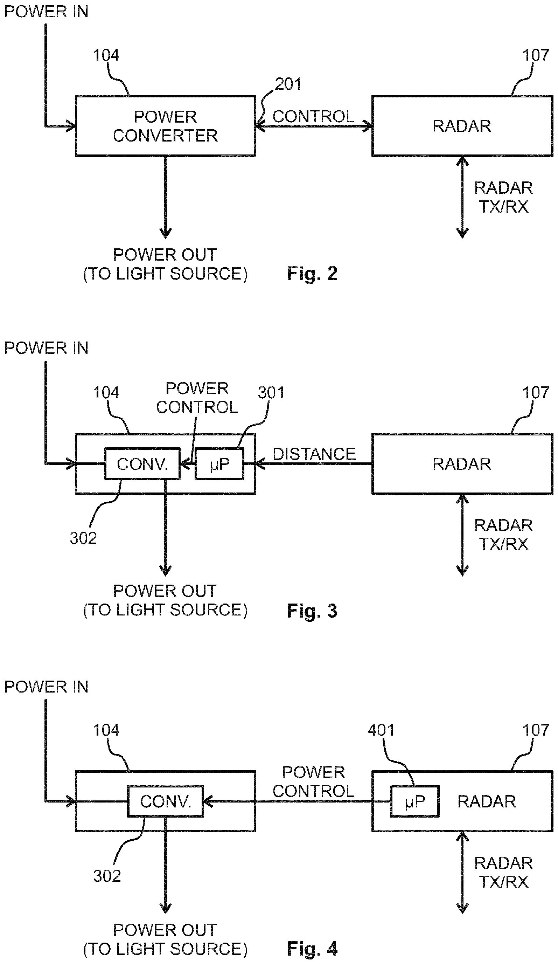

Figs. 2 to 6 illustrate various ways of distributing intelligence and other functions between parts of the lighting apparatus. In each of figs. 2 to 6 the lighting apparatus comprises two basic functional blocks, which are the controllable power converter 104 and the radar 107. Fig. 2 illustrates the basic principle of having a control input 201 in the controllable power converter 104, to which the radar 107 is coupled to provide some kind of control signals. As illustrated in fig. 2 the control connection may be even bidirectional, so that if the controllable power converter 104 contains sufficient signal processing capacity and intelligence it may give control signals to the radar 107, for example to command it to start and stop measuring distances when required.

Fig. 3 illustrates an embodiment in which intelligence is mostly concentrated in the controllable power converter 104. In fig. 3 the radar 107 functions as a simple sensor that provides distance measurements as control signals to the controllable power converter 104. A microprocessor 301 or other signal processing entity in the latter receives the distance measurements and makes decisions about how these should affect the operating power that will be provided to the light sources. The microprocessor 301 formulates power control commands that it then delivers to a converter proper 302 in the controllable power converter 104.

Fig. 4 illustrates an embodiment in which intelligence is mostly concentrated in the radar 107. Instructions for converting distance measurements into power control commands are stored in the form of program code into a microprocessor 401 that forms a part of the radar 107. The control signals that go from the radar 107 to the controllable power converter 104 are direct power control commands that a converter proper 302 receives and executes accordingly.

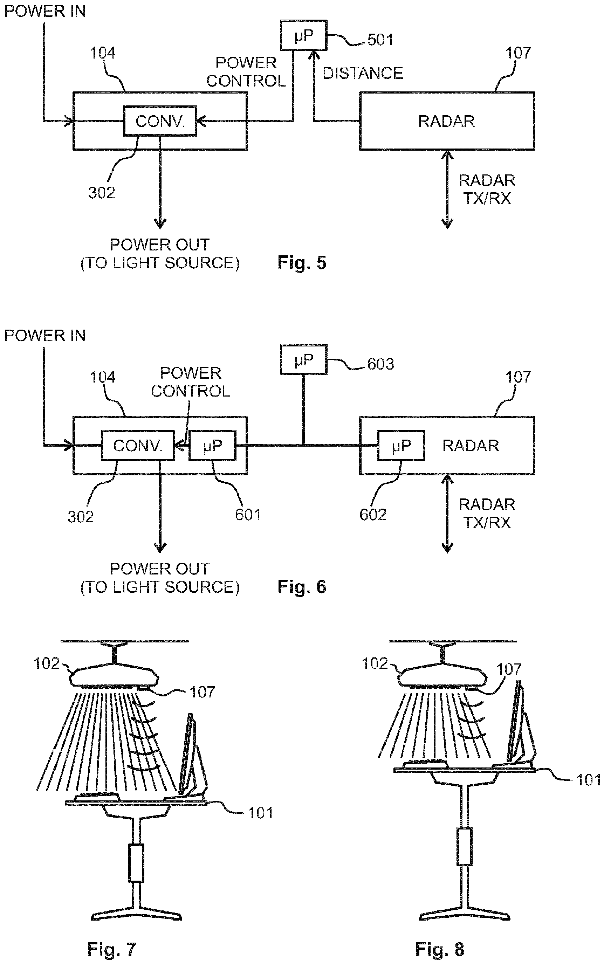

Fig. 5 illustrates an embodiment in which neither the radar 107 nor the controllable power converter 104 is intelligent in the sense of figs. 3 or 4. There is a separate control block 501 that receives the distance measurements from the radar 107, uses them to formulate power control commands, and delivers the last-mentioned to the controllable power converter 104 that again does not need to comprise much more than the converter proper 302. The separate control block 501 may be a part of the same lighting apparatus, or it may be located somewhere else, like in a general control unit of a lighting system that covers a larger area than just the lighting apparatus described here. This shows that the coupling between the radar and the control input of the controllable power converter may be indirect, as long as it enables the provision of control signals to the latter on the basis of distance measurements made by the former.

Fig. 6 illustrates an embodiment in which a number of inherently intelligent functional blocks are involved. The controllable power converter 104 may have its own controlling microprocessor 601, and the radar 107 may have its own controlling microprocessor 602. There may even be an external control block 603 involved. All intelligent units 601, 602, and 603 are linked together through a communications link 604, which may be a data bus for example. In the embodiment of fig. 6 the responsibilities of formulating power control commands and conveying them to the converter proper 302 may be distributed between the intelligent units 601, 602, and 603 in various ways, and this distribution can even be changed during operation, for example depending on the processing load that occurs in each of the intelligent units 601, 602, and 603 and/or depending on other functions that are allocated to the various parts of the apparatus.

Figs. 7 and 8 illustrate a method for controlling illuminance at a distance from one or more light sources. The method comprises using a radar 107 to measure the distance, which here is the vertical distance between the luminaire 102 and the top of the table 101. The light sources are located in the luminaire 102. In fig. 7 the user has set the electrically driven table to a first, lower height for working in a sitting position, while in fig. 8 the user has set the table to a second, higher height for working in a standing position. The method comprises controlling a power level of an operating power provided to the one or more light sources in dependence with the measured distance, so that the power level - and consequently the amount of emitted light - is lower in response to a shorter measured distance (fig. 8) and higher in response to a longer measured distance (fig. 7). In particular, setting the operating power this way aims at maintaining a constant or essentially constant illuminance on the top surface of the table 101 regardless of the vertical distance between it and the luminaire 102.

The dependency between measured distance and correspondingly selected operating power level can be defined in a variety of ways. One possibility is that the appropriate dependency is programmed to the memory of the controlling microprocessor, which can be placed in a variety of ways as shown in figs. 3 to 6, by a human operator during a configuration stage. Another possibility is that the controlling microprocessor calculates the dependency based on information that it downloaded automatically from other devices.

In general, the method may comprise obtaining information indicative of light output characteristic of the one or more light source, so that said information enables calculating illuminance as a function of power level to and distance from the one or more light sources. The method may further comprise selecting the power level on the basis of said information in order to produce a predefined illuminance value on a transversal surface located at the distance measured by the radar. Information indicative of the light output characteristics of the one or more light sources can be downloaded locally from a configuration apparatus, and/or from a distant information source.

Concerning the last-mentioned alternative, a possibility that may become more and more readily available through the general trend of digitalization of built-up environments is the utilization of Building Information Modeling, known by the acronym BIM. In the future it will become more and more common to have all essential information concerning a building stored in a BIM system. The stored information may be accurate enough to enable deriving the known light output characteristics of a lighting apparatus therefrom. For example, the BIM system may comprise at least some identification of the luminaire types and models used. The BIM system may comprise (or the information stored in the BIM system may further enable locating and downloading) performance information of the lighting apparatus, such as its lumen output at various operating power levels and directionality. From such information it is already possible to calculate the illuminance value that this lighting apparatus will produce on a transversal surface located at a distance indicated by a distance measurement made by a radar.

The utilization of information stored in and downloaded from a BIM system involves the particular advantage that such information will most probably be maintained up to date anyway. The mere idea and usability of a BIM system involves an inherent obligation of updating the information stored therein, because otherwise the system would quickly become obsolete and unusable for anything. It can be assumed that any maintenance works that will be performed in the building will comprise, as an inherent part, a step of updating the information in the BIM system to reflect the status of the part on which maintenance was performed. A controlling microprocessor of a lighting apparatus can be programmed to automatically download from the BIM system the information indicative of light output characteristics of the one or more light sources in the lighting apparatus; using such information to enable calculating illuminance as a function of power level to and distance from said one or more light sources can be assumed to give quite accurate results throughout the lifetime of the building.

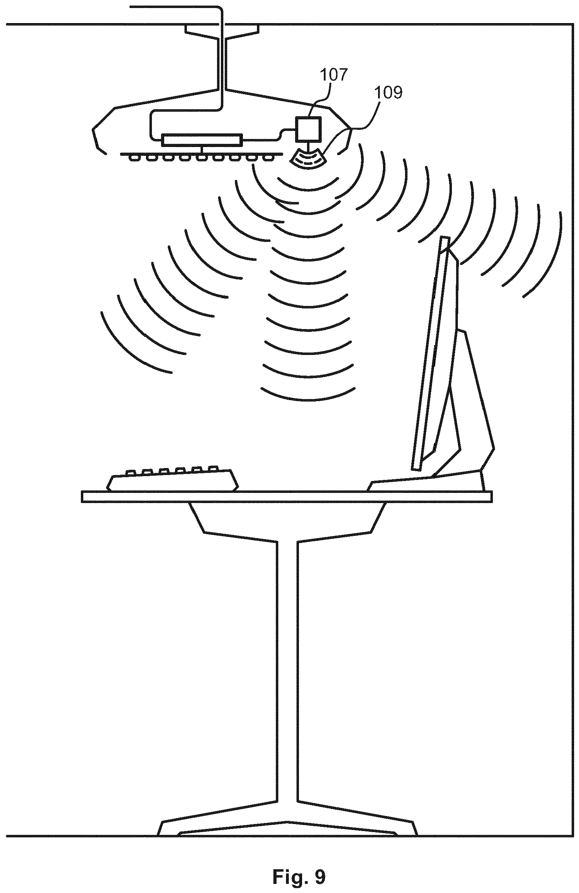

Fig. 9 illustrates a lighting apparatus in which the radar 107 is configured to perform distance measurements in at least two different directions. For this purpose the radar 107 is equipped with a multidirectional antenna 901. Multidirectional antennas of radars are known as such, and their capability of forming two or more antenna lobes may be based on for example phasing and/or the directional location of different antenna elements that are used for transmitting and receiving.

A radar that is capable of performing distance measurements in two or more directions can be used in many ways to bring versatility to the operation of a radar-controller lighting apparatus. As an example, the radar may use one of its antenna lobes (i.e. one of its measurement directions) to detect, whether a user is present within the area that is illuminated by the lighting apparatus. The lighting apparatus may then be configured to set the amount of emitted light not only with the aim of producing a constant illuminance on a surface but additionally (or alternatively) with the aim of selecting the desired level of illuminance higher when a user is present and lower when a user is not present. This may help saving energy, because less energy is consumed for lighting in those places where no user is present.

Another possibility of utilizing a possible multidirectional capability of a radar is to detect, how close the luminaire is to a vertical structure such as a wall of the room. It has been found that the amount of vertical illumination, i.e. the illuminance on vertical surfaces, has an effect on the well-being of users and on how attractive the user consider their environment. It is therefore advantageous to select the amount of light emitted by luminaires close to walls at least partly on the basis of the vertical illuminance that they produce. Such selecting may aim at producing some predefined vertical illuminance value as a function of power level to and distance of the well from the luminaire. A simpler possibility is to always upgrade the amount of light emitted by a luminaire to some higher-than-otherwise value in response to detecting that there is a wall closer than some threshold to the luminaire.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. Lighting apparatus, comprising:
- a controllable power converter (104) for providing operating power to one or more light sources (105), said controllable power converter (104) having a control input (201), and
- a radar (107) coupled to said control input (201) for providing control signals to the controllable power converter (104);
wherein said radar (107) is configured to generate said control signals on the basis of a distance measurement made by said radar (107),
and wherein said controllable power converter (104) is configured to set a power level of said operating power in dependence with said control signals, so that said power level is lower in response to said control signals being indicative of a shorter distance and higher in response to said control signals being indicative of a longer distance measured by said radar (107) .

2. A lighting apparatus according to claim 1, wherein said radar (107) comprises a directional antenna (108) for making said distance measurements in a predefined direction.

3. A lighting apparatus according to claim 2, wherein said predefined direction is a vertical direction downwards from said lighting apparatus in an intended operating orientation of the lighting apparatus.

4. A lighting apparatus according to claim 3, wherein:
- the lighting apparatus comprises one or more light sources (105) coupled to receive said operating power from said controllable power converter (104), and
- at least a part of said light sources (105) are configured to direct a majority of their emitted light into said vertical direction downwards from the lighting apparatus.

5. A lighting apparatus according to any of the preceding claims, wherein said radar (107) is configured to perform said distance measurements in at least two different directions.

6. A lighting apparatus according to any of the preceding claims, wherein:
- said controllable power converter (104) is configured to set said power level of said operating power to a level calculated to, taken known light output characteristics of the lighting apparatus, produce a predefined illuminance value on a transversal surface located at a distance indicated by said distance measurement.

7. A lighting apparatus according to claim 6, wherein said lighting apparatus is configured to automatically download information indicative of said light output characteristics of the lighting apparatus from a distant information storage.

8. Method for controlling illuminance at a distance from one or more light source (105), comprising:
- using a radar (107) to measure said distance, and
- controlling a power level of an operating power provided to said one or more light sources (105) in dependence with the measured distance, so that said power level is lower in response to a shorter measured distance and higher in response to a longer measured distance.

9. A method according to claim 8, comprising:
- obtaining information indicative of light output characteristics of said one or more light sources (105), said information enabling calculating illuminance as a function of power level to and distance from said one or more light sources, and
- selecting said power level on the basis of said information in order to produce a predefined illuminance value on a transversal surface located at the distance measured by said radar (107).

10. A method according to claim 9, comprising downloading information indicative of said light output characteristics of the one or more light sources from a distant information storage.
